# EUROPÄISCHE PATENTANMELDUNG

(11) **EP 2 862 744 A2**
(43) Veröffentlichungstag der Anmeldung: **22.04.2015**
(21) Anmeldenummer: 14189440.2
(22) Anmeldetag: 17.10.2014
(51) Int. Cl.: B60M 5/00

(54) **Verfahren und Vorrichtung zur Überwachung eines Rückleiterkabels eines Bahngleises**

(30) Priorität: 17.10.2013 DE 102013221138
(71) Anmelder: Witt IndustrieElektronik GmbH, 13405 Berlin (DE)
(72) Erfinder: Keese, Thomas, 13467 Berlin (DE)
(74) Vertreter: Ninnemann, Detlef

(57) **Zusammenfassung**

Bei einem Verfahren zur Überwachung eines Rückleiterkabels (3) eines Bahngleises (1, 2), insbesondere zur Erfassung einer Unterbrechung des Rückleiterkabels (3) in Folge eines Kabelbruchs oder Kabeldiebstahls, werden die in den Schienen (11, 12; 21, 22) des Bahngleises (1, 2) und im Rückleiterkabel (3) fließenden Rückströme des Betriebsstromes erfasst und die Summe der Rückströme in den Schienen (11, 12; 21, 22) mit dem Rückstrom im Rückleiterkabel (3) verglichen. Bei einer oberhalb eines vorgegebenen Schwellwertes liegenden Abweichung der Summe der Rückströme in den Schienen (11, 12; 21, 22) von dem Rückstrom im Rückleiterkabel (3) wird ein Signal ausgelöst.

## Beschreibung

Die Erfindung betrifft ein Verfahren und eine Vorrichtung zur Überwachung eines Rückleiterkabels eines Bahngleises gemäß dem Oberbegriff der Ansprüche 1 und 5.

Für einen sicheren Bahnbetrieb mit insbesondere elektrisch betriebenen Schienenfahrzeugen ist die Verlegung von Signalleitungen und eines Rückleiterkabels parallel zu den Schienen eines Bahngleises unabdingbar, wobei das Rückleiterkabel dazu dient, den von einer Oberleitung oder einer Stromschiene mit einem Stromabnehmer des elektrisch betriebenen Schienenfahrzeugs abgenommenen Betriebsstrom, der über die elektrischen Antriebsmotoren und die Radsätze des elektrisch betriebenen Schienenfahrzeugs zu den Schienen des Bahngleises fließt, zu einem den Betriebsstrom in die Oberleitung oder Stromschiene einspeisenden Bahn-Umspannwerk zurückzuführen. Eine Unterbrechung des Rückleiterkabels hat somit zur Folge, dass der zum Umspannwerk zurückfließende Betriebsstrom und damit der über die Antriebsmotoren fließende Antriebsstrom unterbrochen oder zumindest stark abgesenkt wird, so dass ein auf diesem Gleisabschnitt befindliches elektrisch betriebenes Schienenfahrzeug zum Stillstand oder zu einer erheblichen Herabsetzung seiner Fahrgeschwindigkeit gezwungen wird.

Damit das Rückleiterkabel einen geringen Widerstand in dem Stromkreis vom Umspannwerk über die Oberleitung bzw. die Stromschiene, den Stromabnehmer, die elektrischen Antriebsmotoren, die Radsätze und dem Rückleiterkabel zurück zum Umspannwerk bildet, weisen Rückleiterkabel einen großen Querschnitt von beispielsweise 500 mm² auf und bestehen aus einem Material mit einem geringen spezifischen elektrischen Widerstand wie beispielsweise aus Kupfer. Da somit bei Rückleiterkabeln pro laufenden Meter eine Masse bzw. ein Gewicht von vier bis fünf Kilogramm hochwertigen Kupfers anfällt, sind insbesondere Rückleiterkabel in Bahnanlagen ein begehrtes Ziel von Kabeldiebstählen. Derartige Diebstähle bedeuten jedoch nicht nur einen Verlust hochwertigen Kupfers, sondern führen insbesondere zu Unterbrechungen im Bahnbetrieb und aufwendigen Reparaturarbeiten, so dass durch Kabeldiebstähle Schäden verursacht werden, die ein Mehrfaches des Materialwertes des Kupfers der Rückleiterkabel betragen.

Aus der DE 10 2006 009 962 B3 ist ein Verfahren und eine Einrichtung zum Überwachen eines Gleises auf einen Bruch einer seiner Schienen bekannt, bei denen ein in jeder der Schienen bei Überfahrt eines elektrisch angetriebenen Schienenfahrzeugs von diesem zu einem Erdungspunkt fließender Betriebsstrom erfasst wird, und die in beiden Schienen fließenden Betriebsströme miteinander verglichen werden, so dass für den Fall, dass die Differenz der Betriebsströme einen vorgegebenen Grenzwert überschreitet, auf einen Bruch einer der Schienen geschlossen wird.

Aufgabe der vorliegenden Erfindung ist es, ein Verfahren und eine Vorrichtung zur Überwachung eines Rückleiterkabels eines Bahngleises bereitzustellen, mit denen eine Unterbrechung eines Rückleiterkabels, insbesondere in Folge eines Kabeldiebstahls, mit elektrischen bzw. elektronischen Mitteln erfasst und gemeldet wird.

Diese Aufgabe wird erfindungsgemäß durch ein Verfahren mit den Merkmalen des Anspruchs 1 gelöst.

Das erfindungsgemäße Verfahren gewährleistet mit elektrischen bzw. elektronischen Mitteln eine sofortige Erfassung der Unterbrechung eines Rückleiterkabels, insbesondere in Folge eines Kabeldiebstahls, und Abgabe eines Fehler- oder Alarmsignals, so dass umgehend entsprechende Gegenmaßnahmen eingeleitet werden können.

Die erfindungsgemäße Lösung geht davon aus, dass in einem geschlossenen, nicht unterbrochenen Stromkreis vom Bahn-Umspannwerk über die Oberleitung bzw. die Stromschiene, den Stromabnehmer, die elektrischen Antriebsmotoren, die Radsätze und das Rückleiterkabel zurück zum Umspannwerk die Summe der Rückströme in den Schienen gleich dem oder proportional zu dem im Rückleiterkabel fließenden Rückstrom ist, so dass bei einer Abweichung der Summe der in den Schienen fließenden Rückströme von dem Rückstrom im Rückleiterkabel eine Unterbrechung des Rückleiterkabels vorliegen muss. Dabei berücksichtigt die erfindungsgemäße Lösung, dass auch bei einem Schienenbruch die Erfassungseinrichtung wirksam ist, da der in der jeweils anderen Schiene des Bahngleises fließende Rückstrom erhöht ist, so dass die Summe der Rückströme in den Schienen im Wesentlichen unverändert ist. Dabei berücksichtigt die Vorgabe eines Schwellwertes beim Vergleich der Summe der Rückströme in den Schienen mit dem Rückstrom im Rückleiterkabel sowohl Messungenauigkeiten als auch beispielsweise durch einen Schienenbruch verursachte erhöhte Widerstände und dergleichen.

Alternativ zu einem Vergleich der Summe der in den Schienen fließenden Rückströme mit dem Rückstrom im Rückleiterkabel kann das Verhältnis der Summe der in den Schienen fließenden Rückströme zu dem im Rückleiterkabel fließenden Rückstrom gebildet werden, wobei das Verhältnis einem vorgegebenen konstanten Wert bzw. einem vorgegebenen Wertebereich entsprechen muss.

Bei einer Abweichung der Summe der Rückströme in den Schienen vom Rückstrom im Rückleiterkabel bzw. einer Abweichung des Verhältnisses der Summe der in den Schienen fließenden Rückströme zum Rückstrom im Rückleiterkabel von dem vorgegebenen Wert bzw. Wertebereich wird ein Signal abgegeben, das eine optische und/oder akustische Alarmeinrichtung und/oder eine entsprechende Anzeigeeinrichtung betätigt.

Vorzugsweise wird der Rückstrom in den Schienen und/oder der Rückstrom im Rückleiterkabel berührungslos, insbesondere mittels Hallsensoren, gemessen.

Die berührungslose Messung der Rückströme in den Schienen und/oder des Rückstromes im Rückleiterkabel gewährleistet eine Potentialtrennung zwischen der Überwachungseinrichtung und dem Betriebsstromkreis und ermöglicht eine einfache Nachrüstung bestehender Bahngleise mit einer Einrichtung zur Durchführung des Überwachungsverfahrens.

In einer bevorzugten Ausführungsform werden die Rückströme in den Schienen und/oder der Rückstrom im Rückleiterkabel in vorgegebenen Abschnitten des Bahngleises erfasst, wobei die vorgegebenen Abschnitte des Bahngleises insbesondere den Abschnitten zwischen den Kabelverbindungen des Rückleiterkabels mit den Schienen des Bahngleises entsprechen.

Durch die Aufteilung der Überwachungsabschnitte in vorgegebene Abschnitte des Bahngleises wird zum einen die Erfassungsgenauigkeit erhöht und zum anderen die Voraussetzung für eine schnelle Lokalisierung des Unterbrechungsortes geschaffen, da eine Signalauslösung dem jeweiligen überwachten Abschnitt zuzuordnen ist.

Bei einer Unterbrechung des Bahnbetriebes, beispielsweise in Pausenzeiten, wird nach einem weiteren Merkmal des erfindungsgemäßen Überwachungsverfahrens eine Messspannung an mindestens eine der Schienen des Bahngleises angelegt und die in der mindestens einen Schiene und im Rückleiterkabel fließenden Ströme gemessen und beide und miteinander verglichen, so dass bei einer oberhalb eines vorgegebenen Schwellwertes liegenden Abweichung des in der mindestens einen Schiene fließenden Stromes von dem im Rückleiterkabel fließenden Strom ein Signal ausgelöst wird.

Da bei einer Unterbrechung des Bahnbetriebes, aber auch bei einer sehr weiten Entfernung eines den Betriebsstromkreis schließenden elektrisch betriebenen Schienenfahrzeugs kein oder nur ein unterhalb einer Erfassungsschwelle liegender Rückstrom fließt, wird durch die Anlegung einer Messspannung an mindestens eine der Schienen des Bahngleises ein Messstromkreis geschaffen, in dem ein Vergleichsstrom fließt und zur Überwachung des Rückleiterkabels gemessen und verglichen werden kann.

Vorzugsweise wird die Messspannung als Folge von Spannungsimpulsen an die mindestens eine Schiene des Bahngleises angelegt, so dass die zur Überwachung des Rückleiterkabels bei einer Unterbrechung des Bahnbetriebes erforderliche Energie zur Einspeisung der Messspannung minimal ist.

Zur adaptiven bzw. selbstlernenden Überwachung des Rückleiterkabels eines Bahngleises kann der ortstypische Zusammenhang der erfassten Stromverteilung bestimmt und dem Vergleich der Rückströme, Bestimmung des Schwellwertes und der Signalauslösung zugrunde gelegt werden. Durch eine fortlaufende Aktualisierung der gemessenen Stromverteilung wird der Ausgangszustand und die Alterung der Rückleitung, der Schienen und der Anschlüsse bei der Signalauslösung berücksichtigt.

Eine Vorrichtung zur Überwachung eines Rückleiterkabels eines Bahngleises, insbesondere zur Erfassung einer Unterbrechung des Rückleiterkabels infolge Kabelbruchs oder Kabeldiebstahls, weist Einrichtungen zur Erfassung der in den Schienen des Bahngleises und im Rückleiterkabel fließenden Rückströme und eine Auswerteinrichtung auf, die einen Komparator zum Vergleich der Summe der in den Schienen fließenden Rückströme mit dem im Rückleiterkabel fließenden Rückstrom enthält und ein Signal bei einer oberhalb eines vorgegebenen Schwellwertes liegenden Abweichung der Summe der Rückströme in den Schienen von dem Rückstrom im Rückleiterkabel abgibt..

Die erfindungsgemäße Vorrichtung zur Überwachung eines Rückleiterkabels eines Bahngleises zeichnet sich durch einen geringen gerätetechnischen Aufwand zur Lösung der Aufgabenstellung aus, eine Vorrichtung zur Überwachung eines Rückleiterkabels eines Bahngleises bereitzustellen, mit der eine Unterbrechung eines Rückleiterkabels, insbesondere in Folge eines Kabeldiebstahls, mit elektrischen bzw. elektronischen Mitteln erfasst und gemeldet wird.

In vorteilhafter Ausgestaltung der erfindungsgemäßen Vorrichtung sind die Erfassungsund Auswerteinrichtungen in vorgegebenen Abschnitten des Bahngleises angeordnet, wobei die vorgegebenen Abschnitte des Bahngleises vorzugsweise den Abschnitten zwischen den Kabelverbindungen des Rückleiterkabels mit den Schienen des Bahngleises entsprechen.

Da der Rückstromkreis über die Radsätze des elektrisch betriebenen Schienenfahrzeugs zu den Schienen des Bahngleises fließt und von diesen zu einem den Betriebsstrom in die Oberleitung oder Stromschiene einspeisenden Bahn-Umspannwerk, führt eine Unterbrechung des Rückleiterkabels dazu, dass die Auswerteinrichtung des vom Umspannwerk weiter entfernten Abschnitts ein Signal abgibt, während die dem näher am Umspannwerk zugeordnete Auswerteinrichtung keine Rückstromdifferenz feststellt und demzufolge kein entsprechendes Signal abgibt.

Vorzugsweise ist der Ausgang des Komparators mit einer optischen und/oder akustischen Alarmeinrichtung verbunden, so dass insbesondere bei einer Anordnung der Erfassungsund Auswerteinrichtungen in vorgegebenen Abschnitten des Bahngleises eine unmittelbare Lokalisierung und Reaktion beispielsweise auf einen Kabeldiebstahl ausgelöst werden kann.

Bevorzugte Weiterbildungen der erfindungsgemäßen Überwachungsvorrichtung sind den Merkmalen der Ansprüche 12 bis 20 zu entnehmen. Insbesondere sind die Einrichtungen zur Erfassung des in den Schienen des Bahngleises und im Rückleiterkabel fließenden Rückstromes über Meldeleitungen mit der Auswerteinrichtung verbunden, die zumindest teilweise innerhalb des Fahrdrahtes oder des Rückleiterkabels angeordnet sind. Dadurch ist gewährleistet, dass es im Falle einer Beschädigung oder eines Risses des Fahrdrahtes oder des Rückleiterkabels auf jeden Fall zu einer Meldung kommt.

Anhand eines in der Zeichnung dargestellten Ausführungsbeispiels soll der der Erfindung zugrundeliegende Gedanke näher erläutert werden. Es zeigen:
Fig. 1 ein Funktionsschema der erfindungsgemäßen Überwachungsvorrichtung und
Fig. 2 einen Querschnitt durch ein Rückleiterkabel mit darin angeordneter Meldeleitung.

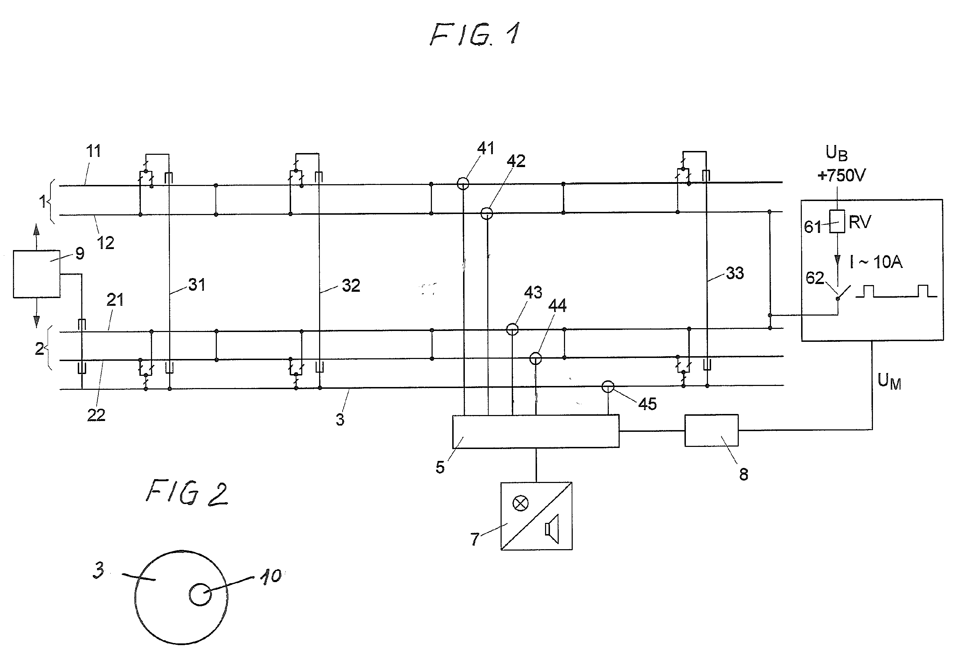

Das in Fig. 1 dargestellte Funktionsschema zeigt zwei Bahngleise 1, 2 mit parallel zu einander verlaufenden Schienen 11, 12 bzw. 21, 22 und ein Rückleiterkabel 3, das über Verbindungskabel 31 bis 33 mit den Schienen 11, 12 bzw. 21, 22 der Bahngleise 1, 2 und einem Bahn-Umspannwerk 9 verbunden ist, das einen Betriebsstrom in eine oberhalb der Bahngleise 1, 2 angeordneten Oberleitung bzw. eine neben den Bahngleisen 1, 2 angeordnete Stromschiene einspeist.

Befindet sich ein elektrisch betriebenes Schienenfahrzeug mit seinen Radsätzen beispielsweise auf den Schienen 11, 12 des Bahngleises 1, so fließt der von der Oberleitung oder Stromschiene mit einem Stromabnehmer abgenommene Betriebsstrom über die Antriebsmotoren und Radsätze des elektrisch betriebenen Schienenfahrzeugs zu den Schienen 11, 12 und von diesen über die Verbindungskabel 31 bis 33 und das Rückleiterkabel 3 zurück zum Bahn-Umspannwerk 9. Durch die über die Länge der Bahngleise 1, 2 verteilt angeordneten Verbindungskabel 31 bis 33 zum Rückleiterkabel 3 können gleiche Abschnitte definiert werden, die einzeln überwacht werden können. Dabei können auch mehrere zwischen den einzelnen Verbindungskabeln 31 bis 33 liegende Abschnitte zur Überwachung zusammengefasst werden.

Innerhalb eines Gleisabschnittes, in dem Funktionsschema die Abschnitte der Bahngleise 1, 2 zwischen den Verbindungskabeln 32 und 33, befindet sich eine Messeinrichtung mit den einzelnen Schienen 11, 12 bzw. 21, 22 zugeordneten, den Rückleiterstrom in den betreffenden Schienen 11, 12 bzw. 21, 22 erfassenden berührungslos arbeitenden Sensoren 41, 42; 43, 44, insbesondere Hallsensoren, sowie ein berührungslos arbeitender Sensor 45 am Rückleiterkabel 3. Die Ausgänge der Sensoren 41 bis 45 sind mit einer Auswerteinrichtung 5 verbunden, die einen Komparator enthält, der die Summe der in den Schienen 11, 12 bzw. 21, 22 fließenden Rückströme mit dem Rückstrom im Rückleiterkabel 3 vergleicht und bei einem Überschreiten eines vorgegebenen, am Komparator einstellbaren Schwellwertes der Differenz der Summe der Rückströme in den Schienen 11, 12 bzw. 21, 22 und des Rückstroms im Rückleiterkabel 3 ein Signal an eine Anzeige- oder Alarmeinrichtung 7 abgibt, die ein optisches und/oder akustisches Signal erzeugt.

Alternativ bildet die Auswerteinrichtung 5 das Verhältnis der Summe der Rückströme in den Schienen 11, 12 bzw. 21, 22 und des Rückstromes im Rückleiterkabel 3 und gibt bei einer Abweichung des Verhältnisses von einem vorgegebenen konstanten Wert oder Wertebereich ein Signal an die Anzeige- oder Alarmeinrichtung 7 ab.

Um bei einer Unterbrechung des Bahnbetriebes oder bei einem Absinken des Rückstromes in den Schienen 11, 12 des Bahngleises 1 bzw. 21, 22 des Bahngleises 2 unter einen vorgegebenen Schwellwert eine Überwachung des Rückleiterkabels 3 zu gewährleisten, ist ein Impulsgenerator 6 vorgesehen, der eine Messspannung U_{M} an mindestens eine der beiden Schienen 11,12 bzw. 21, 22 der Bahngleise 1, 2 abgibt und einen Vorwiderstand 61 enthält, der einerseits an die Betriebsspannung U_{B} von beispielsweise 750 V und andererseits an ein Schaltglied 62, beispielsweise in Form eines Leistungstransistors, angeschlossen ist. Der mit einem Strom von beispielsweise 10 A beaufschlagte Leistungstransistor 62 gibt ausgangsseitig die Messspannung U_{M} in Form rechteckförmiger Impulse an jeweils eine der beiden Schienen 11,12 bzw. 21, 22, in dem Funktionsschema an die Schiene 12 des Bahngleises 1 und die Schiene 21 des Bahngleises 2 ab. Die Auswerteinrichtung 5 vergleicht die Summe der mittels der Hallsensoren 42 und 43 erfassten Messströme in den Schienen mit dem vom Hallsensor 45 des Rückleiterkabels 3 erfassten Messstrom und gibt bei einer Abweichung oberhalb eines vorgegebenen Schwellwertes ein Signal an die Anzeige- oder Alarmeinrichtung 7 ab.

Zur Initiierung des Impulsgenerators 6 ist beispielsweise ein Schwellwertglied 8 vorgesehen, das eine Unterbrechung des Rückstromes bzw. ein Absinken des Rückstromes unterhalb eines vorgegebenen Schwellwertes erfasst und ein Auslösesignal an den Impulsgenerator 6 abgibt. Das Schwellwertglied 8 kann ebenso in die Auswerteinrichtung 5 integriert sein wie der Impulsgenerator 6 zur Abgabe einer Messspannung U_{M} an die Schienen 11, 12 des Bahngleises 1 bzw. 21, 22 des Bahngleises 2.

Als Auswerteinrichtung ist insbesondere ein Mikroprozessor einsetzbar, der über entsprechende Analog-/Digital-Wandler mit den Sensoren bzw. dem Impulsgenerator sowie einem Digital-/Analog-Wandler mit der optischen und/oder akustischen Alarmeinrichtung verbunden ist. Mittels entsprechender Software wird der Mikroprozessor selbstlernend ausgebildet und erstellt nach der Installation der Überwachungsvorrichtung einen ortstypischen Zusammenhang der gemessenen Stromverteilung der Rückströme in den Schienen und im Rückleiterkabel, um dieses Verteilungsmuster beim Vergleich der Rückströme und Auslösung eines Alarmsignals zu berücksichtigen.

Dies kann beispielsweise dadurch erfolgen, dass der jeweilige Schwellwert zur Auslösung eines Alarmsignals an das aktualisierte Verteilungsmuster angepasst wird, um auf diese Weise eine langsame Alterung des Rückleiterkabels, der Schienen und der Anschlüsse zu berücksichtigen.

Der in Fig. 2 dargestellte Querschnitt durch ein Rückleiterkabel 3 zeigt eine innerhalb des Rückleiterkabels 3 angeordnete, als elektrische Leitung, Lichtwellenleitung oder Druckluftleitung ausgebildete Meldeleitung 10 zur Verbindung der Einrichtungen 41 - 45 zur Erfassung des in den Schienen 11, 12; 21, 22 des Bahngleises 1, 2 und im Rückleiterkabel 3 fließenden Rückstromes mit der Auswerteinrichtung 5, wodurch es im Falle einer Beschädigung oder eines Risses des Rückleiterkabels 3 oder alternativ des Fahrdrahtes auf jeden Fall zu einer Meldung kommt.

### Bezugszeichenliste

- 1, 2: Bahngleise
- 3: Rückleiterkabel
- 5: Auswerteinrichtung
- 6: Impulsgenerator
- 7: Anzeige- oder Alarmeinrichtung
- 8: Schwellwertglied
- 9: Bahn-Umspannwerk
- 10: Meldeleitungen
- 11, 12: Schienen
- 21, 22: Schienen
- 31 - 33: Verbindungskabel
- 41 - 45: Sensoren (Hallsensoren)
- 61: Vorwiderstand
- 62: Schaltglied
- U_{B}: Betriebsspannung

## Patentansprüche

1. Verfahren zur Überwachung eines Rückleiterkabels eines Bahngleises, insbesondere zur Erfassung einer Unterbrechung des Rückleiterkabels in Folge eines Kabelbruchs oder Kabeldiebstahls,
**dadurch gekennzeichnet,**
**dass** die in den Schienen (11, 12; 21,22) des Bahngleises (1, 2) und im Rückleiterkabel (3) fließenden Rückströme des Betriebsstromes erfasst werden, die Summe der Rückströme in den Schienen (11, 12; 21, 22) mit dem Rückstrom im Rückleiterkabel (3) verglichen wird und bei einer oberhalb eines vorgegebenen Schwellwertes liegenden Abweichung der Summe der Rückströme in den Schienen (11, 12; 21, 22) von dem Rückstrom im Rückleiterkabel (3) ein Signal ausgelöst wird.

2. Verfahren nach Anspruch 1, **dadurch gekennzeichnet, dass** die Rückströme in den Schienen (11, 12; 21, 22) und/oder der Rückstrom im Rückleiterkabel (3) berührungslos, insbesondere mittels Hallsensoren (41 - 45), gemessen wird bzw. werden.

3. Verfahren nach Anspruch 1 oder 2, **dadurch gekennzeichnet, dass** die Rückströme in den Schienen (11, 12; 21, 22) und der Rückstrom im Rückleiterkabel (3) in vorgegebenen Abschnitten des Bahngleises (1, 2) erfasst, verglichen und ausgewertet werden.

4. Verfahren nach Anspruch 3, **dadurch gekennzeichnet, dass** die vorgegebenen Abschnitte des Bahngleises (1, 2) den Abschnitten zwischen den Kabelverbindungen (31 - 33) des Rückleiterkabels (3) mit den Schienen (11, 12; 21, 22) des Bahngleises (1, 2) entsprechen.

5. Verfahren nach mindestens einem der vorangehenden Ansprüche, **dadurch gekennzeichnet, dass** bei einer Unterbrechung des Bahnbetriebes eine Messspannung (U_{M}) an mindestens eine der Schienen (11, 12; 21, 22) des Bahngleises (1, 2) angelegt und die in der mindestens einen Schiene (11, 12; 21, 22) und im Rückleiterkabel (3) fließenden Ströme gemessen und miteinander verglichen werden und bei einer oberhalb eines vorgegebenen Schwellwertes liegenden Abweichung des in der mindestens einen Schiene (11, 12; 21, 22) fließenden Stromes von dem im Rückleiterkabel (3) fließenden Strom ein Signal ausgelöst wird.

6. Verfahren nach Anspruch 5, **dadurch gekennzeichnet, dass** die Messspannung (U_{M}) als Folge von Spannungsimpulsen an die mindestens eine Schiene (11, 12; 21, 22) des Bahngleises (1, 2) angelegt wird.

7. Verfahren nach mindestens einem der vorangehenden Ansprüche, **dadurch gekennzeichnet, dass** aus den unmittelbar nach Beginn der Überwachung erfassten Rückströmen ein Verteilungsmuster der Rückströme am Erfassungsort erstellt wird und dass das Verteilungsmuster im ungestörten Betrieb bei nicht unterbrochenem Rückleiterkabel (3) fortlaufend aktualisiert wird.

8. Verfahren nach Anspruch 7, **dadurch gekennzeichnet, dass** die Verteilungsmuster der Festlegung des Schwellwertes zugrunde gelegt werden.

9. Vorrichtung zur Überwachung eines Rückleiterkabels eines Bahngleises, insbesondere zur Erfassung einer Unterbrechung des Rückleiterkabels infolge Kabelbruchs oder Kabeldiebstahls,
**gekennzeichnet durch**
Einrichtungen (41 - 45) zur Erfassung des in den Schienen (11, 12; 21, 22) des Bahngleises (1, 2) und im Rückleiterkabel (3) fließenden Rückstromes und einer Auswerteinrichtung (5), die einen Komparator zum Vergleich der Summe der in den Schienen (11, 12; 21, 22) fließenden Rückströme mit dem im Rückleiterkabel (3) fließenden Rückstrom enthält und ein Signal bei einer oberhalb eines vorgegebenen Schwellwertes liegenden Abweichung der Summe der Rückströme in den Schienen (11, 12; 21, 22) von dem Rückstrom im Rückleiterkabel (3) abgibt.

10. Vorrichtung nach Anspruch 9, **dadurch gekennzeichnet, dass** die Einrichtungen (41 - 45) zur Erfassung des in den Schienen (11, 12; 21, 22) des Bahngleises (1, 2) und im Rückleiterkabel (3) fließenden Rückstromes und die Auswerteinrichtung (5) in vorgegebenen Abschnitten des Bahngleises (1, 2) angeordnet sind.

11. Vorrichtung nach Anspruch 10, **dadurch gekennzeichnet, dass** die vorgegebenen Abschnitte des Bahngleises (1, 2) den Abschnitten zwischen Kabelverbindungen (31 -33) des Rückleiterkabels (3) mit den Schienen (11, 12; 21, 22) des Bahngleises (1, 2) entsprechen.

12. Vorrichtung nach mindestens einem der vorangehenden Ansprüche 9 bis 11, **dadurch gekennzeichnet, dass** der Ausgang der Auswerteinrichtung (5) bzw. des Komparators mit einer das Signal empfangenden optischen und/oder akustischen Alarmeinrichtung (7) verbunden ist.

13. Vorrichtung nach mindestens einem der vorangehenden Ansprüche 9 bis 12, **dadurch gekennzeichnet, dass** die Erfassungseinrichtungen (41 - 45) aus berührungslos messenden Sensoren, insbesondere aus Hallsensoren, bestehen.

14. Vorrichtung nach mindestens einem der vorangehenden Ansprüche 9 bis 13, **gekennzeichnet durch** eine Einrichtung (6) zur Abgabe einer Messspannung an mindestens eine Schiene (11, 12; 21, 22) des Bahngleises (1, 2).

15. Vorrichtung nach Anspruch 14, **dadurch gekennzeichnet, dass** die Einrichtung zur Abgabe einer Messspannung aus einem Impulsgenerator (6) zur Abgabe insbesondere rechteckförmiger Spannungsimpulse besteht.

16. Vorrichtung nach mindestens einem der vorangehenden Ansprüche 9 bis 15, **dadurch gekennzeichnet, dass** die Auswerteinrichtung (5) mit einem Schwellwertglied (8) verbunden ist oder ein Schwellwertglied (8) enthält, das bei einem Wert des Rückstromes der kleiner ist als ein vorgegebener Schwellwert die Einrichtung zur Abgabe einer Messspannung (U_{M}) an mindestens eine Schiene (11, 12; 21, 22) des Bahngleises (1, 2) aktiviert.

17. Vorrichtung nach mindestens einem der vorangehenden Ansprüche 9 bis 16, **dadurch gekennzeichnet, dass** die Auswerteinrichtung (5) selbstlernend ausgebildet ist und nach der Installation der Überwachungsvorrichtung aus der Verteilung der erfassten Rückströme bei nicht unterbrochenem Rückleiterkabel (3) ein Verteilungsmuster der Rückströme erstellt, fortlaufend aktualisiert und dem jeweiligen Überwachungsvorgang zugrunde legt.

18. Vorrichtung nach mindestens einem der vorangehenden Ansprüche 9 bis 17, **dadurch gekennzeichnet, dass** die Auswerteinrichtung (5) einen Mikroprozessor zur Erstellung der Verteilungsmuster der Rückströme, deren Aktualisierung, zum Vergleich der Rückströme und zur Auswertung enthält.

19. Vorrichtung nach mindestens einem der vorangehenden Ansprüche 9 bis 18, **dadurch gekennzeichnet, dass** die Einrichtungen (41 - 45) zur Erfassung des in den Schienen (11, 12; 21, 22) des Bahngleises (1,2) und im Rückleiterkabel (3) fließenden Rückstromes über Meldeleitungen (10) mit der Auswerteinrichtung (5) verbunden sind.

20. Vorrichtung nach Anspruch 19, **dadurch gekennzeichnet, dass** die Meldeleitungen (10) zumindest teilweise innerhalb eines Fahrdrahtes oder des Rückleiterkabels (3) angeordnet und mit der Auswerteinrichtung (5) verbunden sind.
